# EUROPÄISCHE PATENTSCHRIFT

(11) **EP 1 313 380 B1**
(45) Veröffentlichungstag und Bekanntmachung des Hinweises auf die Patenterteilung: **02.02.2005**
(21) Anmeldenummer: 00952834.0
(22) Anmeldetag: 30.08.2000
(51) Int. Cl.: A23N 15/10, B07B 4/04

(54) **VERFAHREN UND ANLAGE ZUR HEISSSCHÄLUNG VON SOJA**
METHOD AND INSTALLATION FOR WARM DEHULLING SOYA
PROCEDE ET INSTALLATION POUR DECORTIQUER A CHAUD LE SOJA

(43) Veröffentlichungstag der Anmeldung: 28.05.2003
(60) Teilanmeldung: 04006083.2
(73) Patentinhaber: Bühler AG, 9240 Uzwil (CH)
(72) Erfinder: HEEB, Christian, Minnetonka, MN 55345 (US); KELLER, Urs, V., Plymouth, MN 55447 (US)
(74) Vertreter: Frommhold, Joachim, Dr.
(86) Internationale Anmeldenummer: PCT/CH2000/000461
(87) Internationale Veröffentlichungsnummer: WO 2002/017736

(56) Entgegenhaltungen:
- DE-A- 19 733 424
- US-A- 1 923 200
- US-A- 3 448 856
- US-A- 5 100 062

## Beschreibung

Die Erfindung betrifft ein Verfahren zur Heissschälung und nachfolgenden Vermahlung von Soja oder anderen bohnenartigen Früchten nach den Merkmalen des Oberbegriffs des Patentanspruchs 1 sowie eine Anlage zur Durchführung des Verfahrens.

Die Heissschälung von Soja oder anderen bohnenartigen Früchten, zum Beispiel in Vorbereitung einer nachfolgenden Vermahlung ist allgemein bekannt. So beschreibt die DE-C-3544387 ein derartiges Schälverfahren, bei dem die Früchte bis in den Kern auf eine bestimmte Temperatur durchwärmt, anschliessend einem heissen Gasstrom ausgesetzt werden und dann eine Abtrennung der Schalen erfolgt. Das Durchwärmen auf 50°C bis 75°C erfolgt wenigstens teilweise mittels Kontaktwärme. im Gasstrom wird die Temperatur auf bis zu 90°C erhöht.

Der Kontaktwärme werden die Früchte in einer Vorrichtung mit heissen Flächen ausgesetzt, dem heissen Gasstrom hingegen in einem Fliess- bzw. Wirbelbett. Die Schälvorrichtung ist zum Beispiel ein Prallschäler, dem ein weiteres Fliessbett und/oder ein Windsichter zur Schalenabtrennung nachgeschaltet sein kann. Vor einer Vermahlung erfolgt ein konditionieren.

Bei einer bekannten, zweistufigen Vermahlung folgt auf eine Schrotstufe mit einem Paar Riffelwalzen, gefolgt von einem Paar Gummiwalzen ein Auflöser und auf diesen folgt eine zweite Schrotstufe mit zwei Paar Riffelwalzen.

Der Erfindung liegt nun die Aufgabe zugrunde ein Verfahren zur Heissschälung von Soja oder dergleichen bohnenartigen Früchte zu entwickeln, welches die Nachteile des Standes der Technik vermeidet und eine vereinfachte Verfahrensführung ermöglicht. Diese Aufgabe ist mit den kennzeichnenden Merkmalen des Patentanspruchs 1 gelöst. Vorteilhafte Ausgestaltungen sind in den Unteransprüchen offenbart.

Eine weitere Aufgabe der Erfindung besteht in der Schaffung einer Anlage zur Durchführung des Verfahrens.

Das erfindungsgemässe Verfahren ermöglicht eine höhere Effektivität bei geringerer Anzahl von Verfahrensstufen. Nach dem Konditionieren und Heatshock von Soja oder anderen bohnenartigen Früchten folgt ein Schroten in einer Doppelvermahlungseinheit und eine Prallauflösung, gefolgt von einem Separieren der Schalen mit Aspiration. Dem kann sich eine Feinvermahlung anschliessen.

Das Verfahren ermöglicht es, ein proteinreiches Mehl (47 % bis 48 %, in Abhängigkeit vom Proteingehalt in den Bohnen) herzustellen.

Die Erfindung wird nachfolgend in einem Ausführungsbeispiel an Hand einer Zeichnung näher beschrieben. In der Zeichnung zeigen die
- Fig. 1:: ein erfindungsgemässes Verfahrens-Diagramm einer Anlage zur Heissschälung und Vermahlung von Soja o. dgl.

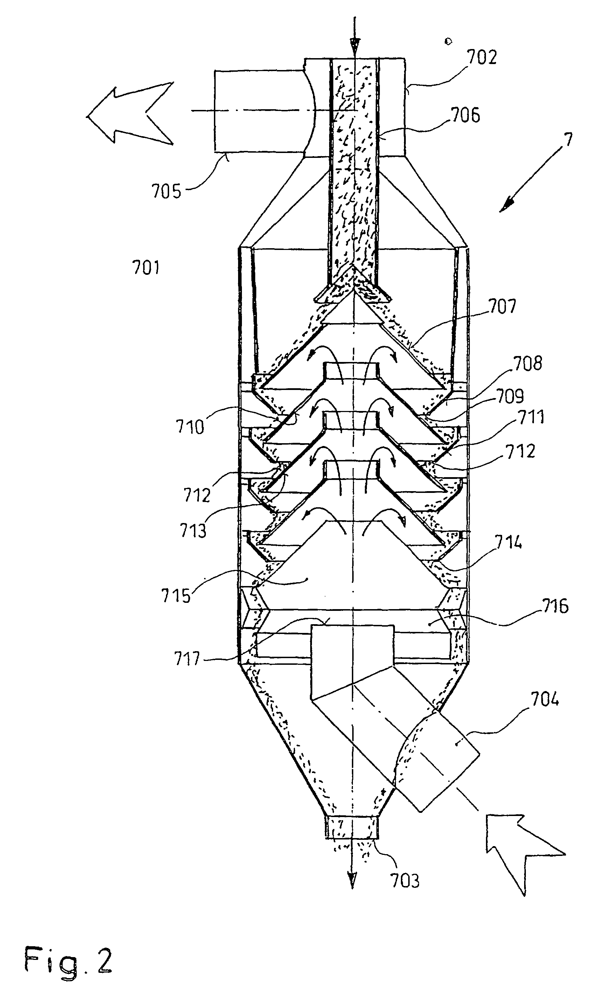

- Fig. 2:: einen Querschnitt eines Schalenseparators.

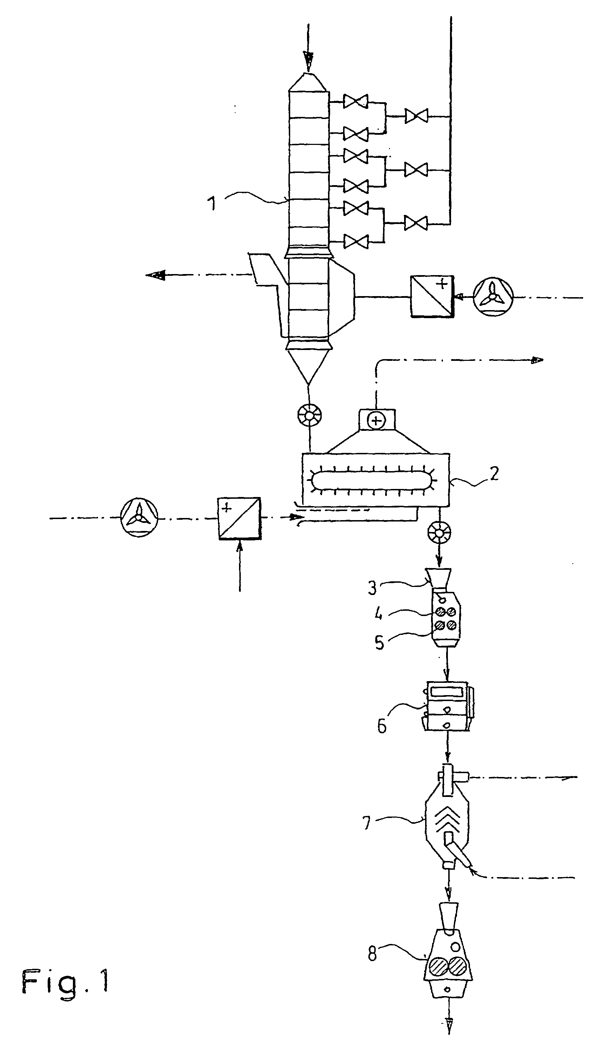

Im nachfolgenden Ausführungsbeispiel sollen nur die wesentlichen Verfahrens- und Anlagenteile näher beschrieben werden. Weitere, zugehörige Verfahrensschritte und Anlagenteile ergeben sich in naheliegender Weise an Hand des bekannten Standes der Technik aus der Fig. 1.

Ganze Sojabohnen gelangen zwecks Konditionierung in einen Dämpfapparat 1 und anschliessend in ein Fliessbett bzw. Wirbelbett 2, wie es zum Beispiel in der DE-C-3544387 beschrieben ist. Im Dämpfapparat 1 erfolgt eine Aufheizung der Sojabohnen mittels Kontaktwärme und im Wirbelbett 2 eine weitergehende Aufheizung im heissen Gasstrom auf eine Durchschnittstemperatur von 70°C bis 90°C. Am Ende der Aufheizung weisen die Bohnen eine Feuchtigkeit von 10-11 % auf. Bereits gelöste Schalen werden sowohl im Dämplapparat 1 als auch im Wirbelbett 2 in bekannter Weise von den Bohnen separiert.

Die so vorbereiteten Bohnen gelangen nun in einen nicht dargestellten Warmhaltebehälter (Zwischendepot) oder direkt in einen Schrotwalzenstuhl 3. Dieser Schrotwalzenstuhl 3 enthält zwei direkt übereinander angeordnete Walzenpaare 4, 5, welche eine Doppelmahlstufe bilden, wie sie zum Beispiel in der EP-C-335925 beschrieben ist. Die Walzenpaare 4, 5 weisen Riffelwalzen auf.

Die geschroteten Bohnen gelangen anschliessend in einen Prallauflöser 6 und danach in einen Schalenseparator 7, wo die Schalen vollständig von den gebrochenen Bohnen getrennt werden. Die separierten Schalen können noch einer weiteren Sichtung im Luftstrom unterzogen werden. Abschliessend erfolgt dann ein Flockieren in einem Flockierwalzwerk 8 oder eine weitergehende Vermahlung.

Der Schalenseparator 7 besteht aus einem weitgehend zylindrischen Gehäuse 701 mit einem oberen Guteinlass 702 und einem unteren Gutauslass 703 sowie einem unteren Gaseinlass 704 und einem oberen Gasauslass 705, um die gebrochenen Bohnen im Gegenstrom zu durchströmen. Dabei werden die Bohnen nicht nur aspiriert, sondern es werden alle losen Schalen im Gasstrom mit entfernt.

Der Guteinlass 702 enthält ein Schüttrohr 706, durch welches die Bohnen (und Schalen) auf ein erstes, konzentrisch zum Schüttrohr 706 angeordnetes kegelförmiges Prallelement 707 kreisringförmig aufschlagen. Durch den in entgegensetzter Richtung strömenden Gasstrom werden lose Schalen und leichte Partikel mitgenommen. Die Bohnenteile hingegen rollen auf der Kegelfläche des Prallelementes 707 herab und fallen in eine darunter befindliche Trimelle 708. In den offenen Boden 709 der Trimelle 708 ragt ein weiteres, darunter befindliches, kegelförmiges Prallelement 710. Durch Schwerkraftwirkung rollen die Bohnen- und Schalenteile von der Trimelle 708 auf die Kegelfläche des zweiten Prallelementes 710 und von da in eine weitere, unter diesem befindliche Trimelle 711. Dabei können weitere Schalenteile mit dem Gastrom abgetrennt werden.

Unterhalb dieser Trimelle 711 ragt ein weiteres solches Prallelement 713 in den Boden 712 der zweiten Trimelle 711. Analog folgen ein drittes und viertes Prallelement. Das vierte Prallelement 713 weist eine analoge Trimelle mit einem offenen Boden 714 auf. In diesen Boden 714 ragt in vorbeschriebener Weise ein fünftes kegelförmiges Prallelement 715. Dieses weist unterhalb der Kegelfläche eine zylindrische Mantelfläche 716 auf, so dass dieses Prallelement 715 die konzentrisch angeordnete Öffnung 717 des Gaseinlasses 704 abdeckt.

Nur das Prallelement 707 weist eine geschlossene, kegelförmige Prallfläche auf, hingegen sind die Spitzen der übrigen Prallelemente oben offen, um ein durchströmen des Gases in Richtung Trimelle und darüberliegendes Prallelement zu ermöglichen.

Die keglige Öffnung des Schüttrohres 706 oder Teile des Schüttrohres 706 können zum Prallelement 707 höhenverstellbar sein (bzw. auch das Prallelement), um den Zufluss der Bohnen bei Bedarf zu regulieren.

Durch diese kaskadenförmige Prallung wird eine sehr gute Aspiration des Bohnengutes und eine effiziente Separation der Schalen erreicht. Es sollten mindestens zwei oder drei Prallelemente vorgesehen werden.

### Bezugszeichen

- 1: Dämpfapparat
- 2: Wirbelbett
- 3: Schrotwalzwerk
- 4: Walzenpaar
- 5: Walzenpaar
- 6: Prallauflöser
- 7: Schalenseparator
- 8: Flockierwalzwerk

- 701: Gehäuse
- 702: Guteinlass
- 703: Gutauslass
- 704: Gaseinlass
- 705: Gasauslass
- 706: Schüttrohr
- 707: Prallelement
- 708: Trimelle
- 709: Boden
- 710: Prallelement
- 711: Trimelle
- 712: Boden
- 713: Prallelement
- 714: Boden
- 715: Prallelement
- 716: Mantelfläche
- 717: Öffnung

## Patentansprüche

1. Verfahren zur Heissschälung von Soja und dergleichen bohnenartigen Früchten und nachfolgender Vermahlung, wobei die Sojabohnen zunächst erwärmt werden, bevorzugt durch Kontaktwärme und/oder im heissen Gasstrom, gefolgt von einer Vermahlung und Schalenseparation, **dadurch gekennzeichnet, dass** die Vermahlung mittels nur einer Doppelmahlstufe ausgeführt wird, welcher eine Prallauflösung und Aspiration mit Abtrennung der Schalen folgt.

2. Verfahren nach Anspruch 1, **dadurch gekennzeichnet, dass** auf die Aspiration ein flaking oder eine Feinvermahlung folgt.

3. Verfahren nach einem der Ansprüche 1 oder 2, **dadurch gekennzeichnet, dass** in der Doppelmahlstufe ein zweimaliges Schroten erfolgt.

4. Verfahren nach mindestens einem der vorangehenden Ansprüche, **dadurch gekennzeichnet, dass** das Gemisch aus gemahlenen Bohnen und Schalen zur Schalenseparation von einem Gasstrom im Gegenstrom durchströmt wird und durch kaskadenförmige Prallung des Gemisches dessen Aspiration und ein abtrennen der Schalen erfolgt.

5. Anlage zur Heissschälung von Soja und dergleichen bohnenartigen Früchten und nachfolgende Vermahlung, welche einen Dämpfapparat (1) und/oder ein Wirbelbett (2) zur Aufwärmung der Sojabohnen, sowie eine nachfolgend angeordnete Mahlstufe und eine Schalenseparation enthält, **dadurch gekennzeichnet, dass** die Mahlstufe nur eine Doppelmahlstufe mit einem Schrotwalzwerk (3) ist, welcher ein Prallauflöser (6), gefolgt von einem Schalenseparator (7) nachgeordnet ist.

6. Anlage nach Anspruch 5, **dadurch gekennzeichnet, dass** nach dem Schalenseparator (7) ein Flockierwalzwerk (8) oder eine Feinvermahlung nachgeordnet ist.

7. Anlage nach einem der Ansprüche 5 oder 6, **dadurch gekennzeichnet, dass** das Schrotwalzwerk (3) zwei direkt übereinander angeordnete Walzenpaare (4, 5) mit Riffelwalzen enthält.

8. Anlage nach mindestens einem der vorangehenden Ansprüche, **dadurch gekennzeichnet, dass** der Schalenseparator (7) kaskadenförmig übereinander angeordnete Prallelemente (707,...) mit kegelförmigen Prallflächen enthält, wobei jeweils zwischen zwei Prallelementen (707, 710,...) Trimellen (708, 711,...) angeordnet sind, in deren offenen Boden (709,...) das das jeweils darunter befindliche Prallelement hineinragt.

9. Anlage nach Anspruch 8, **dadurch gekennzeichnet, dass** mindestens zwei, bevorzugt vier oder fünf Prallelemente (707,...) vorgesehen sind.

10. Anlage nach einem der Ansprüche 8 oder 9, **dadurch gekennzeichnet, dass** die Prallelemente (707,...) konzentrisch zur Mittelachse des Schalenseparators (7) angeordnet sind.

## Claims

1. Process for the hot shelling of soya and similar bean-type fruits and subsequent grinding, in which the soya beans are first heated, preferably through contact heat and/or in a current of hot gas, followed by grinding and separation of shells **characterised by** the fact that the grinding is only carried out by means of a double grinding stage, which is followed by impact grinding and aspiration with separation of the shells.

2. Process in accordance with Claim 1 **characterised by** the fact that the aspiration is followed by flaking or fine grinding.

3. Process in accordance with the Claims 1 or 2 **characterised by** the fact that crushing takes place twice in the double grinding stage.

4. Process in accordance with at least one of the preceding Claims, **characterised by** the fact that the mixture of ground beans and shells is blown through by a current of gas flowing in the opposite direction, and that the aspiration of this mixture and separation of the shells takes place through a cascading impact of the mixture.

5. System for the hot shelling of soya and similar bean-type fruits and subsequent grinding, including a steam device (1) and/or a fluidised bed (2) for the heating of the soya beans as well a grinding stage and shell separation arranged after, **characterised by** the fact that the grinding stage is only a double grinding stage with crushing rollers (3), after which an impact detacher (6) is arranged, followed by a shell separator (7).

6. System in accordance with Claim 5, **characterised by** the fact that flaking rollers (8) or fine grinding is arranged after the shell separator (7).

7. System in accordance with one of the Claims 5 or 6, **characterised by** the fact that the crushing mill (3) includes two pairs of rollers (4,5) with fluted rollers, one arranged directly above the other.

8. System in accordance with at least one of the preceding Claims, **characterised by** the fact that the shell separator (7) includes impact elements (707, ...) arranged in a cascade over each other, with cone-shaped impact surfaces, in which chutes (708, 711, ...) are arranged between two impact elements (707, 710, ...). An impact element projects into the open bottom (709) of the chute beneath which it is situated.

9. System in accordance with Claim 8, **characterised by** the fact that it includes at least two, preferably four or five impact elements (707, ...).

10. System in accordance with one of the Claims 8 or 9, **characterised by** the fact that the impact elements (707,...) are arranged concentrically to the central axis of the shell separator (7).

## Revendications

1. Procédé de décorticage avec broyage ultérieur pour graines de soja et autres légumineuses semblables lors duquel les graines de soja sont tout d'abord chauffées, de préférence par chaleur de contact et/ou dans un flux de gaz chaud, suivi par un broyage et une séparation de l'enveloppe, **caractérisé par le fait que** le broyage est réalisé à l'aide d'un étage de broyage double suivi par un détacheur par chocs et une aspiration avec séparation de l'enveloppe.

2. Procédé selon la revendication 1, **caractérisé par le fait que** l'aspiration est suivie par un floconnage ou un broyage fin.

3. Procédé selon les revendications 1 et 2, **caractérisé par le fait que** dans l'étage de broyage double une double mouture a lieu.

4. Procédé selon au moins une des revendications précédentes, **caractérisé par le fait que**, pour la séparation des enveloppes, le mélange constitué de graines moulues et d'enveloppes est traversé par un flux de gaz circulant à contre-courant et **par le fait que** la chute en cascade du mélange entraîne une aspiration et ainsi la séparation de l'enveloppe.

5. Installation pour le décorticage à chaud et le broyage ultérieur de graines de soja et autres légumineuses semblables comprenant un appareil vapeur (1) et/ou un lit fluidisé (2) pour l'échauffement des graines de soja ainsi qu'un étage de broyage ultérieur et une séparation des enveloppes, **caractérisée par le fait que** l'étage de broyage n'est qu'un étage de broyage double avec un jeu de rouleaux de mouture (3) suivi par un détacheur par chocs (6) suivi lui-même d'un séparateur d'enveloppes (7).

6. Installation selon la revendication 5, **caractérisée par le fait que** le séparateur d'enveloppes (7) est suivi par un jeu de rouleaux de floconnage (8) ou un broyage fin

7. Installation selon l'une des revendications 5 ou 6, **caractérisée par le fait que** le jeu de rouleaux de mouture (3) contient 2 paires de rouleaux cannelés (4,5) situés directement l'un au-dessus de l'autre.

8. Installation selon au moins une des revendications précédentes, **caractérisée par le fait que** le séparateur d'enveloppes (7) comprend des éléments d'impacts (707,...) montés en cascade les uns au-dessus des autres avec une surface d'impact conique et qu'entre deux éléments d'impact (707, 710,...) sont montées des goulottes (708, 709,...) dans le fond desquelles s'élève l'élément d'impact se trouvant en dessous.

9. Installation selon la revendication 8, **caractérisée par le fait qu'**au moins deux, de préférence quatre ou cinq éléments d'impact (707,...) sont prévus.

10. Installation selon l'une des revendications 8 ou 9, **caractérisée par le fait que** les éléments d'impact (707,...) sont montés de façon concentrique par rapport à l'axe central du séparateur d'enveloppes (7).
